# FASCICULE DE BREVET EUROPEEN

(11) **EP 4 433 245 B1**
(45) Date de publication et mention de la délivrance du brevet: **04.11.2026**
(21) Numéro de dépôt: 22798273.3
(22) Date de dépôt: 29.09.2022
(51) Int. Cl.: B23H 7/08, C23C 28/02, C22C 9/04, C22F 1/08

(54) **FIL ÉLECTRODE ET PROCÉDÉ DE FABRICATION**
DRAHTELEKTRODE UND HERSTELLUNGVERFAHREN
ELECTRODE WIRE UND METHOD OF MANUFACTURING

(30) Priorité: 16.11.2021 FR 2112096
(43) Date de publication de la demande: 25.09.2024
(73) Titulaire: Thermocompact, 74370 Epagny Metz-Tessy (FR)
(72) Inventeur: LY, Michel, 74370 Epagny Metz-Tessy (FR); CADIO, Pierro, 74370 Epagny Metz-Tessy (FR)
(74) Mandataire: INNOV-GROUP
(86) Numéro de dépôt international: PCT/EP2022/077240
(87) Numéro de publication internationale: WO 2023/088602

(56) Documents cités:
- JP-B2- 3 090 009
- US-A- 5 762 726
- US-A1- 2009 025 959
- MA D ET AL: "Unidirectional solidification of Zn-rich Zn-Cu peritectic alloys-I. Microstructure selection", ACTA MATERIALIA, ELSEVIER, OXFORD, GB, vol. 48, no. 2, 24 January 2000 (2000-01-24), pages 419 - 431, XP027395609, ISSN: 1359-6454, [retrieved on 20000124]

## Description

L'invention concerne un fil électrode pour l'usinage par électroérosion ainsi qu'un procédé de fabrication de ce fil électrode.

Les fils électrodes sont utilisés pour couper des métaux ou des matériaux conducteurs de l'électricité, par électroérosion dans une machine d'usinage par électroérosion.

Le procédé bien connu d'usinage par électroérosion, ou étincelage érosif, permet d'enlever de la matière sur une pièce conductrice de l'électricité, en générant des étincelles dans une zone d'usinage entre la pièce à usiner et un fil électrode conducteur de l'électricité. Le fil électrode défile en continu au voisinage de la pièce dans le sens de la longueur du fil, tenu par des guidages, et il est déplacé progressivement dans le sens transversal en direction de la pièce, soit par translation transversale des guidages du fil, soit par translation de la pièce.

Un générateur électrique, connecté au fil électrode par des contacts électriques à l'écart de la zone d'usinage, établit une différence de potentiels appropriée entre le fil électrode et la pièce conductrice à usiner. La zone d'usinage entre le fil électrode et la pièce est plongée dans un fluide diélectrique approprié. La différence de potentiels provoque, entre le fil électrode et la pièce à usiner, l'apparition d'étincelles qui érodent progressivement la pièce et le fil électrode. Le défilement longitudinal du fil électrode permet de conserver en permanence un diamètre de fil suffisant pour éviter sa rupture dans la zone d'usinage. Le déplacement relatif du fil et de la pièce dans le sens transversal permet de découper la pièce ou de traiter sa surface, le cas échéant.

Les particules détachées du fil électrode et de la pièce par les étincelles se dispersent dans le fluide diélectrique, où elles sont évacuées.

L'obtention d'une précision d'usinage, notamment la réalisation de découpes d'angle à faible rayon, nécessite d'utiliser des fils de petit diamètre et supportant une grande charge mécanique à la rupture pour être tendus dans la zone d'usinage et limiter l'amplitude des vibrations.

La plupart des machines d'usinage par électroérosion modernes sont conçues pour utiliser des fils métalliques, généralement de 0,25 mm de diamètre, et de charge à la rupture comprise entre 400 N/mm² et 1 000 N/mm².

Lorsqu'une étincelle se produit entre le fil électrode et la pièce, la surface du fil électrode se trouve brusquement échauffée à une très haute température pendant une brève durée. Il en résulte que la matière de la couche superficielle du fil électrode, à l'endroit de l'étincelle, passe de l'état solide à l'état liquide ou gazeux, et se trouve déplacée à la surface du fil électrode et/ou évacuée dans le fluide diélectrique. On constate que la face extérieure du fil électrode atteinte par l'étincelle a été déformée, prenant généralement une forme légèrement concave en cratère, avec des zones où la matière a été fondue et à nouveau solidifiée.

On a pu constater que l'efficacité des étincelles en ce qui concerne l'électroérosion dépend en grande partie de la nature et de la topographie de la couche superficielle du fil électrode. Pour cela, des progrès considérables d'efficacité d'électroérosion ont été obtenus en utilisant des fils électrodes comportant :
- une âme en un ou plusieurs métaux ou alliages assurant une bonne conduction du courant électrique et une bonne résistance mécanique pour tenir la charge mécanique de tension du fil, et
- un revêtement en un ou plusieurs autres métaux ou alliages et/ou une topographie particulière, par exemple des fractures, assurant une meilleure efficacité de l'électroérosion, par exemple une plus grande vitesse d'érosion.

Par exemple, la demande US8067689 décrit un fil électrode ayant une âme en laiton recouverte d'une couche d'alliage cuivre-zinc. Dans cette demande, la couche d'alliage cuivre-zinc comporte un mélange d'alliage cuivre-zinc en phase gamma et d'alliage cuivre-zinc en phase epsilon.

Cette structure particulière de revêtement vise à assurer généralement une plus grande vitesse d'usinage d'une pièce par électroérosion.

De l'état de la technique est également connu de :
- JP3090009B2, et
- MA D et Al : « Unidirectionnal solidification of Zn-rich Zn-Cu peritectic alloys-I. Microstructure selection », ACTA MATERIALIA, Elsevier, Oxford, vol. 48, n°2, 24/01/2000, p 419-431.

Il reste cependant encore un besoin d'augmenter la vitesse d'usinage par électroérosion, pour une intensité électrique d'étincelage donnée.

L'invention vise à satisfaire ce besoin en proposant un fil électrode conforme à la revendication 1.

L'invention a également pour objet un procédé de fabrication du fil électrode revendiqué.

L'invention sera mieux comprise à la lecture de la description qui va suivre, donnée uniquement à titre d'exemple non limitatif et faite en se référant aux dessins sur lesquels :
- la figure 1 est une illustration schématique de la section transversale d'un fil électrode,
- la figure 2 est une illustration schématique, en coupe transversale et agrandie, d'une portion d'une texture lamellaire d'une couche du fil électrode de la figure 1 ;
- la figure 3 est une illustration schématique, encore plus agrandie, d'une partie de la texture lamellaire de la figure 2 ;
- la figure 4 est une photo, en noir et blanc, de la texture lamellaire de la figure 2 ;
- la figure 5 est un organigramme d'un procédé de fabrication du fil électrode de la figure 1.

Dans ces figures, les mêmes références sont utilisées pour désigner les mêmes éléments. Dans la suite de cette description, les caractéristiques et fonctions bien connues de l'homme du métier ne sont pas décrites en détail.

Par la suite, dans le chapitre I, les définitions de certains termes sont données. Dans le chapitre II, des exemples de modes de réalisation détaillés sont décrits en référence aux figures. Ensuite, dans un chapitre III, des variantes de ces modes de réalisation sont présentées. Enfin, dans un chapitre IV, les avantages des différents modes de réalisation sont présentés.

### CHAPITRE I : Définitions et terminologie

L'expression « élément réalisé en matériau A » ou « élément en matériau A » désigne un élément dans lequel le matériau A représente au moins 90 %, en masse, de cet élément et de préférence, au moins 95 % ou 98 % en masse de cet élément.

Un "alliage cuivre-zinc" désigne un alliage formé uniquement de cuivre et de zinc aux impuretés inévitables près.

Une "phase" de l'alliage cuivre-zinc désigne une phase solide de l'alliage cuivre-zinc qui présente une structure cristallographique particulière. Plus précisément, les phases du système cuivre-zinc se distinguent les unes des autres par leur composition et par leur structure cristallographique particulière. Cette structure cristallographique particulière permet de distinguer une phase de l'alliage cuivre-zinc vis-à-vis d'un simple mélange de grains fins en cuivre et en zinc, lequel mélange aurait la même composition globale. Typiquement, des phases connues de l'alliage cuivre-zinc sont la phase alpha, la phase bêta, la phase gamma, la phase delta, la phase epsilon et la phase êta. La structure cristallographique particulière d'une phase est identifiable par différents moyens. Par exemple, les microphotographies optiques ou métallographie d'échantillons polis montrent des nuances de couleurs différentes pour chaque phase, pour peu que l'échantillon ait été attaqué convenablement. Ainsi, pour distinguer la phase gamma de la phase epsilon, une attaque au « Nital », qui est une solution de 3% d'acide nitrique dilué dans de l'éthanol, est réalisée. La phase gamma apparaît alors en gris alors que la phase epsilon apparaît en marron. Il est aussi possible de distinguer la phase gamma de la phase epsilon, en observant l'échantillon sous un microscope électronique à balayage, en utilisant le détecteur d'électrons rétrodiffusés. Il est aussi possible d'identifier la phase d'un échantillon par diffraction de rayons X. Dans ce dernier cas, l'échantillon de fil est placé sous un faisceau incident de rayons X de longueur d'onde précise. On utilise par exemple la raie Kα du cuivre, de longueur d'onde 0,1541 nm. L'intensité des rayons diffractés est évaluée pour chaque angle de diffraction. La phase gamma a un spectre de diffraction X connu, et différent de celui des autres phases du système cuivre-zinc, et de l'oxyde de zinc ZnO qui se trouve souvent à la surface des fils. Si l'alliage cuivre-zinc n'est pas cristallisé sous la forme d'au moins une des phases alpha, bêta, gamma, delta, epsilon, ou êta, il est amorphe, et le spectre de diffraction des rayons X montre alors des bosses aplaties plutôt que de pics saillants.

A une température donnée, les différentes phases de l'alliage cuivre-zinc correspondent chacune à une plage spécifique de concentration en zinc. L'étendue de chacune de ces plages spécifiques de concentration en zinc varie en fonction de la température. La concentration en zinc d'une phase d'un échantillon peut être obtenue par microanalyse de composition. Une microanalyse de composition est réalisée, avec un microscope électronique à balayage équipé d'une sonde de spectrométrie. Un faisceau d'électrons, accéléré par exemple dans un champ électrique de 20 kV, impacte la surface de l'échantillon et provoque une émission de rayon X. Ces rayons X ont un spectre d'énergie caractéristique de la composition de la surface de l'échantillon qui a été impactée par le faisceau d'électrons. Avec une sonde d'analyse spectrométrique par dispersion d'énergie (EDS) ou par sélection de longueur d'onde (WDS), le spectre des rayons X émis par la surface de l'échantillon est mesuré. Des algorithmes permettent de sélectionner les éléments analysés (donc d'éliminer l'effet des impuretés), et de calculer la composition de l'échantillon impacté par le faisceau d'électrons, à partir des spectres mesurés. Il faut noter qu'en raison des interactions entre les rayons X et la matière, le volume analysé par EDS (ou WDS) est généralement d'environ un micromètre cube. A la frontière entre deux phases, une concentration moyenne, qui n'existe en réalité dans aucune des deux phases, peut être mesurée. Les concentrations indiquées ici concernent des phases pures dans leur volume d'analyse sauf dans le cas des zones structurées. Les zones dans lesquelles une concentration est mesurée sont plus grandes que des cubes d'un micromètre de côté.

La phase delta de l'alliage cuivre-zinc est particulière en ce qu'elle existe à l'état stable uniquement entre 559°C et 700°c. Elle n'existe pas à l'état stable à la température ambiante. La structure cristallographique de la phase delta du système cuivre-zinc, dans son état stable à une température de 600 °C, a été publiée en 1971 par J. Lenz et K. Schubert dans le Zeitschrift für Metallkunde vol. 62, pages 810-816.

L'expression « conducteur électrique » désigne un matériau dont la conductivité électrique, à 20 °C, est supérieure à 10⁶ S/m et, de préférence, supérieure à 10⁷ S/m.

L'axe longitudinal d'un fil est l'axe le long duquel s'étend principalement ce fil.

L'expression « section transversale » désigne une section du fil électrode perpendiculaire à son axe longitudinal.

L'expression « couche du fil électrode » désigne une couche annulaire du fil électrode qui est située, dans chaque coupe transversale du fil électrode, entre une limite circulaire intérieure et une limite circulaire extérieure. En réalité, ces limites ne sont pas des cercles parfaits. Toutefois, en première approximation, dans ce texte, ces limites sont assimilées à des cercles. Ces limites circulaires sont toutes les deux centrées sur l'axe du fil électrode. La limite circulaire intérieure est la limite de la couche qui est la plus proche de l'axe du fil électrode. A l'inverse, la limite circulaire extérieure est la limite de la couche qui est la plus éloignée de l'axe du fil électrode. Entre ces limites circulaires intérieure et extérieure, la phase de l'alliage cuivre-zinc est homogène ou formée d'un enchevêtrement non régulier de différentes phases de l'alliage cuivre-zinc. A l'inverse, au niveau des limites circulaires intérieure et extérieure, la composition chimique et/ou la forme cristallographique changent brusquement.

Un "enchevêtrement de différentes phases" de l'alliage cuivre-zinc désigne un mélange de différentes phases de l'alliage cuivre-zinc dans lequel ces différentes phases ne sont pas disposées chacune à l'intérieur d'une couche homogène respective. Autrement dit, en se déplaçant le long d'un cercle centré sur l'axe longitudinal du fil et qui traverse cette enchevêtrement de phases, on rencontre, en alternance, une phase puis une autre et cela répété plusieurs fois.

Une couche "homogène" est une couche formée d'une seule phase de l'alliage cuivre-zinc.

Une couche "uniforme" désigne une couche formée d'un matériau qui, dans une section transversale du fil, s'étend, autour de l'axe du fil et à l'intérieur de cette couche, continûment ou pratiquement continûment. Ainsi, une couche uniforme ne comporte pas une multitude de fractures qui la partitionne en une multitude de zones séparées les unes des autres, dans une section transversale du fil, par de très nombreuses fractures radiales. De très nombreuses fractures radiales désigne plus d'une dizaine de fractures radiales qui divisent la couche en question en une dizaine de zones mécaniquement isolées les unes des autres, dans la section transversale, par ces fractures radiales.

A l'inverse, le terme "couche fracturée" désigne une couche qui comporte une multitude de fractures qui la partitionne en une multitude de zones séparées les unes des autres, dans une section transversale du fil, par de très nombreuses fractures radiales.

L'expression "couche superficielle métallique" ou tout simplement "couche superficielle" désigne la couche en alliage cuivre-zinc ou en zinc du fil électrode qui se trouve la plus à l'extérieur du fil électrode. Cette couche superficielle métallique peut comporter à sa surface une fine pellicule d'oxyde. Typiquement, cette pellicule d'oxyde est principalement composée d'oxyde de zinc, d'hydroxydes de zinc, de carbonate de zinc ainsi que d'éventuels résidus tels que des résidus de lubrifiant de tréfilage. La face extérieure de cette couche superficielle métallique est donc soit confondue avec la face extérieure du fil électrode en absence de la fine pellicule d'oxyde soit séparée de la face extérieure du fil électrode uniquement par cette fine pellicule d'oxyde.

Une "fracture radiale" est une fracture qui s'étend principalement, à l'intérieur d'une section transversale du fil électrode, dans une direction radiale.

L'expression « température ambiante » désigne une température comprise entre 15 °C et 30 °C et, typiquement, égale à 25 °C.

Une "trajectoire médiane d'un élément longiligne" est la trajectoire le long de laquelle s'étend principalement cet élément longiligne. Dans une section transversale du fil électrode, cette trajectoire médiane passe au milieu de l'épaisseur de cet élément longiligne. Autrement dit, la section transversale de l'élément longiligne est centrée sur cette trajectoire médiane. Ainsi, dans une section transversale, la surface de l'élément longiligne située d'un côté de sa trajectoire médiane est égale à la surface de l'élément longiligne située de l'autre côté de cette trajectoire médiane.

L'épaisseur moyenne d'un élément longiligne le long de sa trajectoire médiane est égale à la moyenne des épaisseurs de cet élément longiligne mesurées en chaque point de sa trajectoire médiane. En chacun de ces points de la trajectoire médiane, l'épaisseur est mesurée dans une direction perpendiculaire à cette trajectoire médiane et contenue dans le plan de la section transversale.

### CHAPITRE Il : Exemples de modes de réalisation

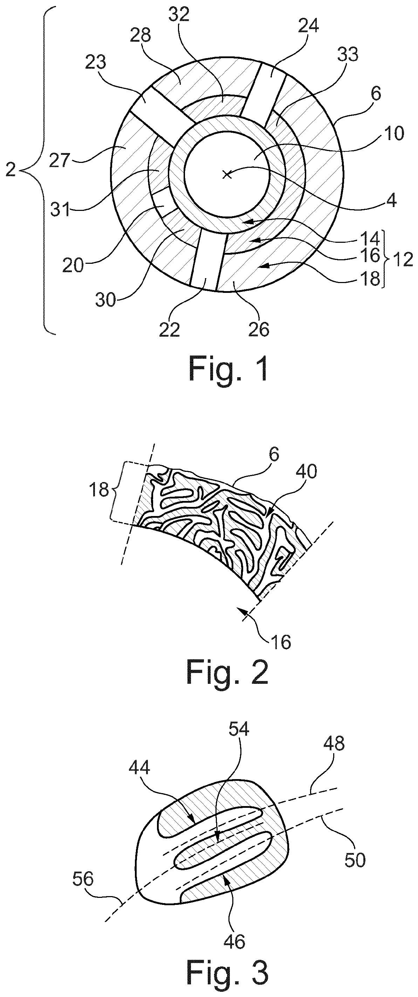

La figure 1 représente un fil électrode 2 pour l'usinage par électroérosion tel que décrit dans la partie introductive de ce texte.

A cet effet, le fil électrode 2 présente une charge à la rupture comprise entre 400 N/mm² et 1000 N/mm². Le fil 2 s'étend le long d'un axe 4 longitudinal. L'axe 4 est ici perpendiculaire au plan de la feuille. La longueur du fil 2 est supérieure à 1 m et, typiquement, supérieure à 10 m ou 50 m.

Le fil 2 présente une face extérieure 6 directement exposée aux étincelles lors de l'usinage d'une pièce par électroérosion à l'aide de ce fil. La face extérieure 6 est une face cylindrique qui s'étend le long de l'axe 4. La courbe directrice de la face 6 est principalement un cercle centré sur l'axe 4. Ainsi, la section transversale du fil 2 est circulaire. Le diamètre extérieur D₂ du fil 2 est typiquement compris entre 50 µm et 1 mm et, le plus souvent, compris entre 70 µm et 400 µm. Ici, le diamètre du fil 2 est égal à 250 µm.

Dans ce mode de réalisation, le fil 2 comporte :
- une âme centrale 10 réalisée en matériau électriquement conducteur, et
- un revêtement 12 directement déposé sur l'âme 10.

L'âme 10 a pour fonction d'assurer, à elle seule, l'essentiel de la charge à la rupture du fil 2. Elle a également pour fonction d'assurer la conductivité électrique du fil 2. A cet effet, elle est réalisée en matériau électriquement conducteur. Typiquement, elle est réalisée en métal ou en alliage métallique. Par exemple, dans ce mode de réalisation, l'âme 10 est réalisée en cuivre.

Le diamètre D₁₀ de l'âme 10 est compris entre 0,75D₂ et 0,98D₂ et, typiquement, entre 0,85D₂ et 0,95D₂, où D₂ est le diamètre extérieur du fil électrode 2. Par exemple, ici, le diamètre D₁₀ est égal à 230 µm.

Le revêtement 12 est conçu pour accroître la vitesse d'usinage et donc le rendement érosif du fil électrode et/ou la qualité des faces de la pièce obtenue après l'usinage par électroérosion. La qualité d'une face découpée par électroérosion est d'autant meilleure que sa rugosité est faible.

L'épaisseur du revêtement 12 est petite devant le diamètre D₂ du fil 2, c'est-à-dire inférieure à 10 % du diamètre D₂ et, de préférence, inférieure à 8 % du diamètre D₂. L'épaisseur du revêtement 12 correspond à la distance la plus courte, dans une section transversale, entre la limite circulaire qui sépare l'âme 10 du revêtement 12 et la face extérieure 6.

Dans ce mode de réalisation, le revêtement 12 est formé de trois couches 14, 16 et 18 successivement et directement empilées les unes sur les autres en allant de l'axe 10 vers la face extérieure 6. L'épaisseur de la couche 18 est typiquement supérieure à 1 % ou 2 % du diamètre D₂. Par exemple, l'épaisseur de la couche 18 est au moins supérieure à 2 µm ou 5 µm ou 10 µm. De préférence, l'épaisseur des autres couches 14 et 16 est inférieure à l'épaisseur de la couche 18. Par exemple, ici, les épaisseurs des couches 14 et 16 sont inférieures, respectivement, à 5 µm et à 10 µm.

La couche 14 est une couche homogène et uniforme réalisée en alliage cuivre-zinc en phase bêta. La concentration en zinc est donc typiquement comprise entre 45 % atomiques et 50 % atomiques, le reste étant du cuivre et les impuretés inévitables.

La couche 16 est une couche homogène réalisée en alliage cuivre-zinc en phase gamma. La concentration en zinc est typiquement comprise entre 62 % atomiques et 71 % atomiques, le reste étant du cuivre et les impuretés inévitables. Par exemple, ici, la concentration en zinc est de 64 % atomiques.

Il découle du diagramme d'équilibre de phase du système cuivre-zinc tel que récemment mis à jour que, dans un état stable, l'alliage cuivre-zinc en phase gamma présente une concentration en zinc qui est comprise entre 60 % atomiques et 62 % atomiques à la température ambiante, le reste étant du cuivre. Un diagramme d'équilibre de phase du système cuivre-zinc récemment mis à jour a, par exemple, été publié dans l'article suivant : Liang et al. : « Thermodynamic assessment of the Al-Cu-Zn system, part I : Cu-Zn binary system », CALPHAD, volume 51, 2015, page 224 à 232.

Ainsi, avec une concentration de 64 % en zinc, l'alliage cuivre-zinc en phase gamma de la couche 16 n'est pas dans un état stable à la température ambiante. Ici, il est dans un état métastable. Dans un état métastable, la transformation de l'alliage cuivre-zinc en phase gamma vers son état stable, et donc la diminution de sa concentration en zinc, est très lente à la température ambiante. Autrement dit, cette transformation de la phase gamma vers son état stable à température ambiante est pratiquement imperceptible par un être humain. Ainsi, la composition de cette phase gamma dans son état métastable ne varie pratiquement pas depuis sa fabrication jusqu'à son amenée dans une zone d'usinage d'une machine d'électroérosion lorsque ce fil 2 est stocké et transporté dans des conditions normales et donc maintenu à température ambiante. Un procédé de fabrication d'une telle couche d'alliage cuivre-zinc métastable est décrit plus loin.

La couche 18 est une couche superficielle texturée en alliage cuivre-zinc. Plus précisément, dans chaque section transversale, la couche 18 est ici principalement formée de plusieurs zones texturées. Chacune de ces zones texturées est uniquement formée par un enchevêtrement d'alliage cuivre-zinc en phase gamma et d'alliage cuivre-zinc en phase epsilon. Cet enchevêtrement est décrit plus en détail en référence aux figures 2 et 3 suivantes.

Dans la couche 18, la concentration en zinc dans chacune des zones texturées est supérieure à 72 % ou 73 % atomiques et inférieure à 80 % atomiques. Ici, la concentration en zinc des zones texturées de la couche 18 est égale à 74 % atomiques, le reste étant du cuivre aux impuretés près. Avantageusement, l'épaisseur de la couche 18 est supérieure à 10 % ou 20 % ou 30% de l'épaisseur totale du revêtement 12.

Dans ce mode de réalisation, les couches 16 et 18 sont fracturées. Ainsi, les couches 16 et 18 comportent des fractures qui divisent chacune de ces couches en plusieurs zones mécaniquement séparées les unes des autres, dans une section transversale, par des fractures. Comme décrit plus loin, ces fractures sont obtenues par tréfilage d'un fil dans lequel les couches 16 et 18 sont uniformes ou pratiquement uniformes. Après tréfilage, la même matière ne s'étend plus continûment tout autour de l'axe 4 mais est divisée en plusieurs zones de matière qui, dans une section transversale, sont mécaniquement séparées les unes des autres par des fractures ou fissures. Ces fractures s'étendent principalement radialement et traversent de part en part la couche 16 et/ou la couche 18.

Plus précisément, il a été observé qu'il existe principalement deux types différents de fracture dans le fil électrode 2. Le premier type de fracture est composé de fractures qui s'étendent uniquement à l'intérieur de la couche 16. Ce premier type de fracture ne s'étend pas à travers la couche 18, c'est-à-dire qu'elle ne traverse pas complètement cette couche 18. Sur la figure 1, la référence numérique 20 désigne une illustration schématique d'une fracture du premier type. La fracture 20 s'étend depuis la limite circulaire qui sépare les couches 14 et 16 jusqu'à la limite circulaire qui sépare les couches 16 et 18. La fracture 20 ne s'étend pas à l'intérieur des couches 14 et 18.

Le deuxième type de fracture est composé de fractures qui s'étendent à la fois à travers les couches 16 et 18. Typiquement, le deuxième type de fracture débute au niveau de la limite circulaire entre les couches 14 et 16 et se prolonge jusqu'à la face extérieure 6. C'est seulement ce deuxième type de fracture qui divise la couche 18 en plusieurs zones distinctes.

Sur la figure 1, trois fractures 22 à 24 du deuxième type sont schématiquement représentées. Ces trois fractures 22 à 24 divisent la couche 18 en trois zones distinctes 26 à 28. Les fractures du deuxième type contribuent aussi, avec les fractures du premier type, à diviser la couche 16 en plusieurs zones distinctes. Sur la figure 1, les fractures 20 et 22 à 24 divisent la couche 16 en quatre zones distinctes 30 à 33.

Que ce soient les fractures du premier type ou du deuxième type, ces fractures correspondent à des évidements ou creux vides de matière solide ou liquide. La largeur d'une fracture, dans une direction perpendiculaire à la direction radiale le long de laquelle elle s'étend, est généralement inférieure à 2 µm.

La plus grande largeur, dans une section transversale, de chacune des zones texturées est typiquement supérieure à l'épaisseur de la couche 18. Ici, cette plus grande largeur est supérieure à 5 µm ou 10 µm. Dans ce texte, la largeur d'une zone texturée, dans une section transversale, est définie comme étant égale à la longueur du côté du rectangle de plus petite surface qui contient entièrement cette zone texturée et dont au moins l'un des côtés est perpendiculaire à une ligne radiale passant par cette zone texturée et contenue dans cette section transversale. La ligne radiale est celle qui passe par l'axe 4 et qui divise en deux parties égales le plus petit secteur angulaire qui contient entièrement la zone texturée dans la section transversale et dont le sommet est sur l'axe 4. Le côté du rectangle dont la longueur est mesurée est celui qui est perpendiculaire à cette ligne radiale.

La figure 2 représente un agrandissement de la section transversale d'une portion intérieure d'une zone texturée de la couche 18. La figure 3 représente une portion encore plus agrandie de l'une de ces zones texturées. Dans chaque zone texturée, l'alliage cuivre-zinc en phase gamma se présente principalement sous la forme d'une texture lamellaire 40 (figure 2) et l'alliage cuivre-zinc en phase epsilon remplit les interstices entre les lamelles de la texture lamellaire 40. La texture lamellaire 40 est représentée en blanc sur les figures 2 et 3, tandis que l'alliage cuivre-zinc en phase epsilon est hachuré sur ces mêmes figures.

Typiquement, la masse de la texture lamellaire 40 représente plus de 80 % et généralement plus de 90 %, 95 % de la masse de l'alliage cuivre-zinc en phase gamma contenu dans la couche 18.

Comme expliqué plus loin, ici, la texture lamellaire 40 est obtenue en interrompant, avant qu'elle soit complètement achevée, la transformation d'une couche en alliage cuivre-zinc en phase delta en une sous-couche inférieure homogène d'alliage cuivre-zinc en phase gamma éventuellement encore surmontée d'une sous-couche homogène d'alliage cuivre-zinc en phase epsilon.

La texture lamellaire 40 est formée de nombreuses lamelles longilignes qui, dans la section transversale, s'étendent chacune principalement le long d'une trajectoire médiane respective. Par exemple, la figure 3 représente deux lamelles 44 et 46 de la texture lamellaire 40 qui s'étendent chacune le long, respectivement, des trajectoires médianes 48 et 50.

Dans la grande majorité des cas, les lamelles s'étendent sur plusieurs micromètres de sorte que leur trajectoire médiane médiane font plusieurs micromètres de long. La trajectoire médiane le long de laquelle s'étend une lamelle est souvent courbe ou sinueuse.

Dans la plupart des cas, dans chaque section transversale, l'une des extrémités d'une lamelle est directement mécaniquement raccordée à une autre lamelle. La texture lamellaire 40 forme ainsi, dans chaque section transversale, une arborescence contenant une multitude de chemins qui s'étendent continûment depuis la couche 16 jusqu'à la face extérieure 6. L'autre extrémité de la lamelle est soit libre, c'est-à-dire qu'elle n'est pas reliée mécaniquement directement à une autre lamelle, soit elle est aussi mécaniquement directement reliée à une autre lamelle.

Pour la majorité des lamelles et généralement pour plus de 80 % ou 90 % ou 95 % des lamelles de la texture lamellaire 40, l'épaisseur moyenne de la lamelle le long de sa trajectoire médiane est inférieure à 1 µm ou à 0,5 µm. L'épaisseur moyenne des lamelles le long de leurs trajectoires médianes est également généralement supérieure à 0,1 µm.

Étant donné que les lamelles sont longilignes, la majorité et typiquement plus de 80 % des interstices entre les lamelles sont également longilignes. Plus précisément, les interstices situés entre les lamelles s'étendent chacun eux aussi principalement le long d'une trajectoire médiane respective. La figure 3 représente un tel interstice 54 qui est situé entre les deux lamelles 44 et 46 et qui s'étend le long d'une trajectoire médiane 56.

L'épaisseur moyenne des interstices longilignes le long de leurs trajectoires médianes respectives et, dans plus de 50 % des cas et le plus souvent dans plus de 80 % des cas, inférieure à 1 µm ou à 0,5 µm. Cette épaisseur moyenne est aussi généralement supérieure à 0,1 µm.

Sur la figure 3, pour accroître la visibilité de la trajectoire médiane d'un élément longiligne, cette trajectoire médiane a été prolongée, de chaque côté, au-delà de l'élément longiligne. Toutefois, en réalité, chaque trajectoire médiane débute au niveau d'une extrémité de l'élément longiligne et se termine au niveau de son extrémité opposée.

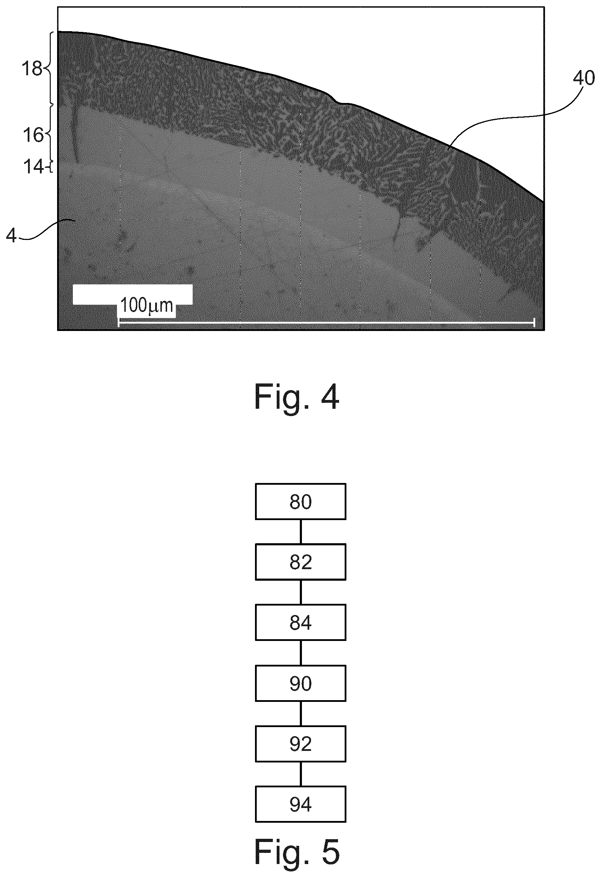

La figure 4 représente une portion d'une zone texturée obtenue en observant la section transversale du fil 2 à l'aide d'un microscope optique. Sur cette photo, dans la couche 18, les lamelles en alliage cuivre-zinc en phase gamma qui forment la texture lamellaire 40 sont coloriées en blanc, tandis que l'alliage cuivre-zinc en phase epsilon qui remplit les interstices entre les lamelles est colorié en noir. Dans le cas de cette photo, la section transversale observée est celle du fil électrode juste avant qu'il subisse une opération de tréfilage et donc avant que la plupart des fractures du premier et du deuxième type soient créées. Toutefois, comme visible, par exemple dans la partie de la couche 16 située en haut à gauche, la couche 16 peut comporter, même avant l'exécution de cette opération de tréfilage, des fractures du premier type.

Un procédé de fabrication du fil 2 va maintenant être décrit en référence au procédé de la figure 5.

Lors d'une étape 80, un fil d'ébauche en métal est d'abord fourni. Dans cet exemple, le fil d'ébauche est un fil en cuivre de 1 mm de diamètre.

Ensuite, lors d'une étape 82, un revêtement est réalisé sur le fil d'ébauche. Ce revêtement recouvre continument la totalité de la face extérieure du fil d'ébauche. Ce revêtement est réalisé dans un matériau ou dans plusieurs matériaux ayant la capacité de former une couche superficielle en alliage cuivre-zinc en phase delta lorsque sa température est comprise entre 559 °C et 700 °C. Cette plage de températures correspond à la plage de températures à l'intérieur de laquelle l'alliage cuivre-zinc en phase delta est stable. En dehors de cette plage de températures, la phase delta n'est pas stable. En particulier, lorsque la température descend en dessous de 559 °C, la phase delta se décompose spontanément d'une part en alliage cuivre-zinc en phase gamma et, d'autre part, en alliage cuivre-zinc en phase epsilon. Ainsi, si aucun traitement thermique particulier n'est réalisé, par exemple si la couche d'alliage cuivre-zinc en phase delta est simplement refroidie dans l'air à température ambiante, la couche en alliage cuivre-zinc en phase delta se décompose en une sous-couche homogène en alliage cuivre-zinc en phase gamma surmontée d'une sous-couche homogène d'alliage cuivre-zinc en phase epsilon. Dans cet exemple, le revêtement est seulement formé, à ce stade, par une couche en zinc directement déposée sur la face extérieure du fil d'ébauche. Pour cela, la couche en zinc est déposée sur le fil d'ébauche par un procédé de zingage électrolytique pour obtenir un fil électro-zingué de diamètre supérieur à 1 mm.

Ici, à la fin de l'étape 82, ce fil électro-zingué est tréfilé jusqu'à ce que son diamètre soit égal à 420 µm. A ce stade, l'épaisseur du revêtement en zinc est égale à 25 µm.

Lors d'une étape 84, la température du revêtement en zinc est alors portée à une température Tᵢₙᵢ comprise entre 559 °C et 700 °C et, de préférence, comprise entre 559 °C et 600 °C et encore plus avantageusement comprise entre 595 °C et 600 °C. Le fait de choisir une température Tᵢₙᵢ inférieure ou égale à 600 °C permet de limiter la formation de gouttes de zinc en fusion lors du chauffage. Ici, la température Tᵢₙᵢ est égale à 600 °C.

Par exemple, lors de l'étape 84, le fil électro-zingué et tréfilé est introduit dans un four dont la température intérieure est égale à 600 °C. Ce traitement thermique est réalisé sous air.

Lors de l'étape 84, le fil électro-zingué et tréfilé est maintenu à la température Tᵢₙᵢ pendant une durée dᵢₙᵢ suffisamment longue pour qu'une couche superficielle d'alliage cuivre-zinc en phase delta d'au moins 4 µm d'épaisseur se forme. Ici, la durée dᵢₙᵢ est aussi choisie suffisamment courte pour éviter la formation d'une couche en alliage cuivre-zinc en phase epsilon au-dessus de la couche de d'alliage cuivre-zinc en phase delta. En effet, comme enseigné dans la demande US5762726A, à cette température Tᵢₙᵢ, le cuivre se diffuse progressivement à l'intérieur du revêtement en zinc. Ainsi, à un endroit donné du revêtement initialement en zinc, la concentration en cuivre augmente progressivement avec le temps.

De plus, étant donné que le cuivre se diffuse à l'intérieur du revêtement en allant du fil d'ébauche en cuivre vers l'extérieur du fil, il existe dans l'épaisseur du revêtement un gradient de concentration en cuivre. La concentration en cuivre, à l'intérieur du revêtement diminue progressivement en allant du fil d'ébauche vers l'extérieur. A l'inverse, la concentration en zinc croît au fur et à mesure qu'on se rapproche de la face extérieure du fil. A cause de ce gradient de concentration en cuivre, au cours de l'étape 84, une superposition de plusieurs couches d'alliage cuivre-zinc dans différentes phases apparaît. Dans cette superposition de couches d'alliage cuivre-zinc, les couches sont ordonnées par concentration croissante en zinc au fur et à mesure qu'on se rapproche de la face extérieure. La couche superficielle d'alliage cuivre-zinc est donc toujours celle qui a la concentration en zinc la plus élevée.

Ici, l'objectif de l'étape 84 est de former une couche superficielle en alliage cuivre-zinc en phase delta. A la température Tᵢₙᵢ, la phase delta de l'alliage cuivre-zinc apparaît lorsque la concentration en zinc est comprise entre 72 % atomiques et 77 % atomiques, le reste étant du cuivre.

La durée dᵢₙᵢ est donc ici choisie suffisamment longue pour laisser suffisamment de temps pour que la quantité de cuivre qui diffuse jusqu'à la couche superficielle soit suffisamment importante pour faire tomber la concentration en zinc à l'intérieur de cette couche superficielle entre 72 % atomiques et 77 % atomiques. A la température Tᵢₙᵢ, tant que la concentration en zinc dans la couche superficielle est comprise entre 72 % atomiques et 77 % atomiques, l'alliage cuivre-zinc à l'intérieur de cette couche est en phase delta.

Si la durée dᵢₙᵢ est choisie trop courte, la couche superficielle est en alliage cuivre-zinc en phase epsilon car la concentration en zinc n'a pas suffisamment diminué pour permettre la formation de la phase delta de cet alliage. Si, au contraire, la durée dᵢₙᵢ est choisie trop longue, la concentration en zinc à l'intérieur de la couche superficielle tombe en dessous de 72 % atomiques. On obtient alors, par exemple, une couche superficielle d'alliage cuivre-zinc en phase gamma, voire même en phase bêta.

A partir de ces explications, la durée dᵢₙᵢ est déterminée par expérimentations successives. Par exemple, dans le cas décrit ici, la durée dᵢₙᵢ est égale à 6 s.

A l'issue de la durée dᵢₙᵢ, le revêtement déposé sur le fil d'ébauche en cuivre se compose d'une couche en alliage cuivre-zinc en phase bêta surmontée d'une couche en alliage cuivre-zinc en phase gamma, elle-même surmontée par une couche superficielle en alliage cuivre-zinc en phase delta.

Dès que la couche superficielle en phase delta est obtenue, c'est-à-dire ici dès la fin de la durée dᵢₙᵢ, le fil subit successivement une première étape 90 de refroidissement lent, immédiatement suivie d'une deuxième étape 92 de refroidissement rapide.

Lors de l'étape 90, le refroidissement du fil est suffisamment lent pour maintenir la température de la couche superficielle en dessous de 559 °C et au-dessus d'une température T₉₀ₘᵢₙ pendant une durée d₁ comprise entre d₁ₘᵢₙ et d₁ₘₐₓ. La température T₉₀ₘᵢₙ est supérieure ou égale à 350 °C et, de préférence, supérieure ou égale à 400 °C ou 500 °C.

La durée d₁ₘᵢₙ est la durée minimale pendant laquelle la température de l'alliage cuivre-zinc en phase delta doit être maintenue en dessous de 559°C pour que :
- une partie de l'alliage cuivre-zinc en phase delta se transforme en alliage cuivre-zinc en phase gamma et forme une texture lamellaire en alliage cuivre-zinc en phase gamma qui contient la majorité de l'alliage cuivre-zinc en phase gamma, et
- en parallèle, l'autre partie de l'alliage cuivre-zinc en phase delta se transforme en alliage cuivre-zinc en phase epsilon qui remplit les interstices entre les lamelles de la texture lamellaire en alliage cuivre-zinc en phase gamma.

La durée d₁ₘₐₓ est la plus petite durée au delà de laquelle la texture lamellaire en alliage cuivre-zinc disparaît pour laisser la place à une sous-couche dont 90% de la masse est formée par un alliage cuivre-zinc en phase gamma.

Il a été observé que la durée d₁ est généralement comprise entre 0,1 s et 1,5 s. Pour maintenir la température de la couche superficielle entre 559 °C et 350 °C, il faut donc que la vitesse de refroidissement lors de l'étape 90 soit inférieure à 2100 °C/s. De préférence, lors de l'étape 90, la vitesse de refroidissement est inférieure à 1000 °C/s ou inférieure à 400 °C/s. Ici, lors de l'étape 90, le fil est refroidi en le sortant rapidement du four et en le plaçant dans l'air à la température ambiante pendant toute la durée d₁. La vitesse de refroidissement dans l'air à la température ambiante est généralement comprise entre 50 °C/s et 200 °C/s et souvent proche ou égale à 100 °C/s.

Ici, la durée d₁ a été choisie égale à 0,6 s. Pour cela, le fil est sorti du four puis maintenu dans l'air à température ambiante pendant une seconde. En effet, dans ces conditions, il faut environ 0,4 s pour que la température du fil passe de 600 °C à 559 °C. Ainsi, le fil est maintenu à une température comprise entre 559 °C et 350 °C pendant 0,6 s. Dans ce cas, à l'issue de la durée d₁, la température de la couche superficielle est d'environ 500 °C et donc bien supérieure à 350 °C.

A l'issue de l'étape 90, la texture lamellaire 40 est formée à l'intérieur de la couche 18. Toutefois, comme précédemment expliqué, à ce stade, cette texture lamellaire n'est pas stable.

L'étape 92 a pour but de figer la texture lamellaire 40 obtenue à l'issue de l'étape 90 et donc de l'amener dans un état métastable à la température ambiante. Pour cela, immédiatement après l'étape 90, lors de l'étape 92, le fil est soumis à un refroidissement rapide pendant une durée d₂ qui fait brusquement descendre la température de la texture lamellaire 40 en dessous de 30 °C.

Ce deuxième refroidissement est qualifié de rapide car la durée d₂ est deux fois et, typiquement dix fois ou cinquante fois plus courte que la durée d₁. La durée d₂ est inférieure à 0,05 s et, le plus souvent, inférieure à 0,03 s.

Pour obtenir une durée d₂ aussi courte, la vitesse de refroidissement pendant l'étape 92 est beaucoup plus élevée que pendant l'étape 90. Typiquement, cette vitesse de refroidissement est supérieure 10000 °C/s pendant l'étape 92. Par exemple, ici, à la fin de la durée d₁, le fil est trempé dans de l'eau à température ambiante. Dans ce cas, la vitesse de refroidissement pendant l'étape 92 est de l'ordre de 20000 °C/s et la durée d₂ est d'environ 0,02 s.

A l'issue de l'étape 92, la texture lamellaire 40 est dans un état métastable et ne varie donc plus de façon perceptible tant que le fil est conservé à température ambiante.

Ensuite, lors d'une étape 94, le fil obtenu à l'issue de l'étape 92 est tréfilé pour obtenir le fil électrode 2. Cette étape 94 de tréfilage permet d'amener le diamètre du fil électrode au diamètre souhaité, c'est-à-dire ici à un diamètre de 250 µm. L'étape 94 fracture les couches 16 et 18. Ainsi, c'est lors de cette étape 94 que la plupart des fractures situées dans les couches 16 et 18 sont créées.

### CHAPITRE III : Variantes

### Variantes du procédé de fabrication :

De nombreux autres procédés de fabrication du fil 2 sont possibles. Par exemple, le procédé de fabrication décrit dans le chapitre II peut être mis en œuvre avec un fil d'ébauche qui n'est pas nécessairement réalisé entièrement en cuivre. Par exemple, en variante, le fil d'ébauche comporte seulement une couche superficielle dont la concentration en cuivre est supérieure à 50% ou 60% atomiques et inférieure à 95% ou 90 % atomiques. De même il peut aussi être mis en œuvre avec un revêtement dont la concentration en zinc est inférieure à 100 % atomiques. Toutefois, de préférence, la concentration en zinc du revêtement est élevée, c'est-à-dire supérieure à 95 % atomiques ou à 98 % atomiques.

Il existe différents procédés pour obtenir la couche d'alliage cuivre-zinc en phase delta qui est ensuite refroidie une première fois lors de l'étape 90 puis une seconde fois lors de l'étape 92. Par exemple, selon une première variante, pour obtenir cette couche d'alliage cuivre-zinc en phase delta, il est procédé comme suit :
- déposer à la surface du fil d'ébauche une couche de nickel d'environ 5 µm d'épaisseur,
- tremper ce fil d'ébauche revêtu de nickel dans un bain de cuivre et de zinc en fusion ayant une concentration en zinc comprise entre 72 % et 77 % atomiques et le complément en cuivre, et laissez diffuser à une température comprise entre 559 °C et 700 °C, de préférence entre 559 °C et 600 °C, encore de préférence de 600 °C, de façon à créer la couche superficielle en alliage cuivre-zinc en phase delta qui est stable tant que sa température est maintenue entre 559 °C et 700 °C.

Selon une deuxième variante, il est procédé comme suit :
- déposer à la surface du fil d'ébauche une couche de nickel d'environ 5 µm d'épaisseur,
- coextruder ce fil d'ébauche revêtu de nickel avec un alliage de cuivre et de zinc ayant une concentration en zinc comprise entre 72 % et 77 % atomiques et maintenu à une température comprise entre 559 °C et 700 °C, de préférence égale à 600 °C, de façon à créer la couche superficielle en alliage cuivre-zinc en phase delta qui est stable sur ce fil d'ébauche revêtu de nickel tant que la température est égale à 600 °C.

Selon une troisième variante, il est procédé comme suit :
- déposer à la surface du fil d'ébauche métallique une couche de nickel d'environ 5 µm d'épaisseur,
- déposer sur la couche de nickel une couche de cuivre, puis une couche de zinc, dans des proportions entre le cuivre et le zinc comprises entre 72 % et 77 % atomiques de zinc, avec un excès de zinc choisi pour compenser l'évaporation inévitable d'une partie du zinc pendant l'étape ultérieure de diffusion,
- laissez diffuser à une température comprise entre 559 °C et 700 °C, de préférence entre 559 °C et 600 °C, encore de préférence égale à 600 °C, de façon à créer la couche superficielle en alliage cuivre-zinc en phase delta,

Selon une quatrième variante, il est procédé comme suit :
- déposer sur le fil d'ébauche, par électrodéposition en phase aqueuse, un revêtement de cuivre et de zinc dont la composition est celle de la phase delta,
- porter le fil à une température comprise entre 559 °C et 700 °C, de préférence entre 559 °C et 600 °C, encore de préférence entre 595 °C et 600 °C, de façon à créer la couche superficielle en alliage cuivre-zinc en phase delta.

En pratique, pour réaliser l'électrodéposition en phase aqueuse du revêtement de cuivre et de zinc dont la composition est celle de la phase delta, le fil d'ébauche constitue la cathode, et on utilise une anode, par exemple, en alliage cuivre-zinc dans laquelle la concentration en zinc est comprise entre 72 % et 77 % atomiques, c'est-à-dire en un mélange approprié de phases gamma et epsilon à température ambiante. On adapte le bain d'électrolyse pour déposer un revêtement dont la composition est celle de la phase delta, de préférence avec 76 % de zinc dans le dépôt. Par exemple un tel bain peut contenir :
- l'eau en tant que solvant,
- 9 g par litre de cyanure de cuivre CuCN,
- 70 g par litre de cyanure de zinc Zn(CN)2 ,
- 125 g par litre de cyanure de sodium NaCN,
- 81 g par litre d'hydroxyde de potassium KOH,
- à une température de 20 à 80 °C,
- avec une densité de courant de 1 à 10 A/dm2 .

L'avantage de l'électrodéposition d'un alliage cuivre-zinc est que sa composition est constante dans l'épaisseur du revêtement, contrairement à la diffusion de zinc sur un substrat de cuivre ou de laiton, qui présente un gradient de composition en l'absence de couche barrière.

L'étape 94 de tréfilage peut être omise. Dans ce cas, il n'existe pas de fracture entre les différentes zones texturées. Au contraire, la texture lamellaire s'étend continûment sur toute la périphérie du fil électrode.

En variante, la durée dᵢₙᵢ est choisie suffisamment longue pour qu'une couche superficielle en alliage cuivre-zinc en phase epsilon soit formée au-dessus de la couche en alliage cuivre-zinc en phase delta. Dans ce cas, à l'issue des étapes 90 et 92, la couche 18 qui contient la texture lamellaire est recouverte par une fine couche en alliage cuivre-zinc en phase epsilon. Ainsi, dans ce cas, la couche 18 n'est pas la couche superficielle du fil électrode.

### Variantes du fil électrode :

L'âme du fil électrode n'est pas nécessairement réalisée en cuivre ou dans un alliage comportant du cuivre comme, par exemple, le laiton. Par exemple, l'âme peut aussi être réalisée en acier ou dans un autre métal électriquement conducteur. Dans le cas où l'âme ne comporte pas de cuivre, l'obtention de la couche superficielle en alliage cuivre-zinc en phase delta est réalisée différemment. Par exemple, elle peut être réalisée selon l'une des première à quatrième variantes décrites ci-dessus du procédé de fabrication.

Les couches 14 et 16 peuvent être omises. C'est notamment le cas si la couche superficielle d'alliage cuivre-zinc en phase delta n'est pas obtenue en mettant en œuvre un procédé lors duquel le cuivre de l'âme centrale diffuse à l'intérieur du revêtement en zinc. Les première à quatrième variantes ci-dessus du procédé de fabrication sont des exemples de tels procédés de fabrication qui ne mettent pas en œuvre une diffusion du cuivre de l'âme centrale dans un revêtement en zinc.

L'âme n'est pas nécessairement réalisée dans un seul métal ou dans un seul alliage métallique. En variante, l'âme comporte plusieurs couches chacune réalisées dans un métal ou un alliage métallique respectif. Par exemple, l'âme comporte un corps centrale en cuivre ou en acier revêtu d'une couche en laiton.

En variante, la couche 18 est uniforme et donc formée d'une seule zone texturée qui s'étend continûment sur tout le pourtour de l'âme 10. Par exemple, pour fabriquer cette variante, lors de l'étape 82, le fil électro-zingué est tréfilé pour obtenir directement le diamètre final souhaité et l'étape 94 de tréfilage est omise. Les autres étapes du procédé de la figure 5 restent, par exemple, inchangées.

### CHAPITRE IV : Avantages des modes de réalisation décrits :

Il a été observé que, lors de son passage dans la zone d'usinage d'une machine d'électroérosion où se déroule un procédé d'électroérosion, la face extérieure du fil électrode reçoit généralement plusieurs étincelles successives. Il en résulte que, après une première étincelle affectant la face extérieure du fil électrode, une étincelle ultérieure se produit sur la face extérieure qui a été modifiée par la première étincelle et les autres étincelles intermédiaires. Autrement dit, les étincelles modifient progressivement la face extérieure du fil électrode, ce qui peut affecter l'efficacité des étincelles ultérieures en ce qui concerne notamment la vitesse d'électroérosion. En particulier, les étincelles modifient localement la topographie du revêtement du fil électrode par la fusion de la matière qui peut s'écouler. Par exemple, dans le cas du fil électrode de la demande US8067689, c'est notamment la fusion de l'alliage cuivre-zinc en phase epsilon qui modifie la topographie du revêtement car la phase epsilon présente une température de fusion inférieure à celle de la phase gamma.

Pour préserver une couche superficielle de fil électrode ayant une bonne efficacité érosive tout au long de son parcours dans la zone d'usinage lors de l'usinage par électroérosion, ici, il est proposé de réduire autant que possible la dégradation de cette efficacité par les étincelles successives d'usinage. De cette façon, la face extérieure du revêtement du fil électrode peut conserver une bonne efficacité érosive pendant une partie plus longue de son parcours dans la zone d'usinage où se produisent les étincelles d'électroérosion.

Par rapport au fil électrode de la demande US8067689 dont la couche superficielle présente des îlots en alliage cuivre-zinc en phase gamma noyés dans de l'alliage cuivre-zinc en phase epsilon, quand les fils électrodes décrits ici sont soumis à une étincelle d'usinage, intense et de courte durée, les zones texturées produisent moins de liquide. Dès lors, par exemple, les cratères résultant des étincelles d'électroérosion ont moins de zones re-solidifiées. Lorsque la quantité de liquide produite est moindre, le fil électrode perd moins de matière pendant l'étincelle. Il est donc possible de réduire la vitesse de défilement du fil électrode, et donc la consommation de fil électrode, tout en conservant une bonne vitesse d'usinage.

D'autre part, quand la quantité de liquide produite est moindre, il y a moins de fractures ou pores qui se trouvent occultés par le flux de liquide, de sorte que la topographie de surface du fil électrode est mieux préservée. La vitesse d'usinage est ainsi augmentée.

Ces performances améliorées du fil électrode décrit ici sont actuellement expliquées par le fait que l'alliage cuivre-zinc en phase epsilon présent dans la couche 18 se trouve coincé entre les lamelles de la texture lamellaire 40. Dès lors, quand l'alliage cuivre-zinc en phase epsilon fond, cet alliage est retenu à l'intérieur des interstices par les lamelles de la texture lamellaire 40 puisque la température de fusion des lamelles en alliage cuivre-zinc en phase gamma est plus élevée que la température de fusion de l'alliage cuivre-zinc en phase epsilon.

Le fait que la couche 18 soit en plus la couche superficielle du fil électrode permet d'exploiter les propriétés de la texture lamellaire 40 dès le début du procédé d'usinage par électroérosion.

## Revendications

1. Fil électrode pour l'usinage par électroérosion, ce fil électrode comportant :
- une âme métallique (10), et
- sur l'âme métallique, un revêtement (12) comprenant une ou plusieurs zones texturée (26-28) d'alliage cuivre-zinc, chacune de ces zones texturées étant seulement formée d'un enchevêtrement d'alliage cuivre-zinc en phase gamma et d'alliage cuivre-zinc en phase epsilon,
**caractérisé en ce que**, à l'intérieur de chaque zone texturée (26-28) d'alliage cuivre-zinc, la majorité de l'alliage cuivre-zinc en phase gamma se présente sous la forme d'une texture lamellaire (40) dans laquelle les interstices (54) entre les lamelles (44, 46) en alliage cuivre-zinc en phase gamma sont remplis par l'alliage cuivre-zinc en phase epsilon.

2. Fil électrode selon la revendication 1, dans lequel le revêtement comporte une première couche (18) d'alliage cuivre-zinc qui s'étend sur toute la périphérie de l'âme, chaque zone texturée d'alliage cuivre-zinc étant située à l'intérieur de cette première couche.

3. Fil électrode selon la revendication 2, dans lequel la première couche (18) forme la couche superficielle du fil électrode de sorte que chaque zone texturée d'alliage cuivre-zinc affleure la face extérieure du fil électrode.

4. Fil électrode selon la revendication 2 ou 3, dans lequel la première couche (18) comporte des fractures (22-24) qui, dans une section transversale du fil électrode, séparent mécaniquement les différentes zones texturées (26-28) d'alliage cuivre-zinc.

5. Fil électrode selon l'une quelconque des revendications précédentes, dans lequel le revêtement (12) comprend successivement en allant de l'âme (10) vers l'extérieure du fil électrode :
- une deuxième couche (16) homogène d'alliage cuivre-zinc uniquement formée d'alliage cuivre-zinc en phase gamma, et
- la première couche (18) directement réalisée sur la deuxième couche.

6. Fil électrode selon l'une quelconque des revendications précédentes, dans lequel l'épaisseur de la première couche (18) d'alliage cuivre-zinc est supérieure à 2 µm et la plus grande largeur, dans une section transversale du fil électrode, de chaque zone texturée (26-28) d'alliage cuivre-zinc est supérieure à 5 µm.

7. Fil électrode selon l'une quelconque des revendications précédentes, dans lequel:
- chaque lamelle (44, 46) de la texture lamellaire s'étend principalement, dans une coupe transversale du fil électrode, le long d'une trajectoire médiane respective (48, 50), et
- pour la majorité des lamelles de la texture lamellaire, l'épaisseur moyenne de la lamelle le long de sa trajectoire médiane est inférieure à 1 µm ou à 0,5 µm.

8. Fil électrode selon la revendication 7, dans lequel, pour la majorité des interstices (54) situés entre deux lamelles, la largeur maximale de cet interstice est inférieure à 1 µm ou à 0,5 µm.

9. Procédé de fabrication d'un fil électrode conforme à l'une quelconque des revendications précédentes, **caractérisé en ce que** ce procédé comporte les étapes suivantes :
a) réaliser (82), sur un fil d'ébauche en métal, un revêtement ayant la capacité de former une couche d'alliage cuivre-zinc en phase delta lorsque sa température est comprise entre 559°C et 700°C, puis
b) porter (84) ce revêtement à une température comprise entre 559°C et 700°C et maintenir le revêtement à cette température jusqu'à obtenir une couche d'alliage cuivre-zinc en phase delta, puis
c) dès que la couche d'alliage cuivre-zinc en phase delta est obtenue, réaliser un premier refroidissement (90) qui maintient la température de cette couche d'alliage cuivre-zinc qui était en phase delta à une température inférieure à 559°C et supérieure à 350°C pendant une durée d₁ comprise entre des durées d₁ₘᵢₙ et d₁ₘₐₓ, où :
- la durée d₁ₘᵢₙ est la durée minimale pendant laquelle la température de l'alliage cuivre-zinc en phase delta doit être maintenue entre 559°C et 350°C pour que :
- une partie de l'alliage cuivre-zinc en phase delta se transforme en alliage cuivre-zinc en phase gamma et forme une texture lamellaire en alliage cuivre-zinc en phase gamma qui contient la majorité de l'alliage cuivre-zinc en phase gamma, et
- en parallèle, l'autre partie de l'alliage cuivre-zinc en phase delta se transforme en alliage cuivre-zinc en phase epsilon qui remplit les interstices entre les lamelles de la texture lamellaire en alliage cuivre-zinc en phase gamma, et
- la durée d₁ₘₐₓ est la durée au delà de laquelle la texture lamellaire en alliage cuivre-zinc disparaît pour laisser la place à une sous-couche dont 90% du poids est formé par un alliage cuivre-zinc en phase gamma, puis
d) immédiatement après que la durée d₁ se soit écoulée, réaliser un second refroidissement (92) qui amène la température de la texture lamellaire à 30°C en moins de 0,05 s.

10. Procédé selon la revendication 9, dans lequel la durée d₁ₘᵢₙ est supérieure ou égale à 0,1 s et la durée d₁ₘₐₓ est inférieure ou égale 1,5 s.

11. Procédé selon l'une quelconque des revendications 9 à 10, dans lequel :
- la concentration en cuivre d'une couche superficielle du fil d'ébauche est supérieure à 50% ou 60% atomiques, et
- la réalisation du revêtement comporte la réalisation, directement sur cette couche superficielle du fil d'ébauche, d'une couche dont la concentration en zinc est supérieure à 98% atomiques.

12. Procédé selon la revendication 11, dans lequel l'étape b) consiste à placer le fil d'ébauche sur lequel le revêtement a été réalisé dans un four à 600°C pendant 6 s.

## Patentansprüche

1. Elektrodendraht für die Funkenerosion, wobei dieser Elektrodendraht umfasst:
- einen Metallkern (10) und
- auf dem Metallkern eine Beschichtung (12), die einen oder mehrere strukturierte Bereiche (26-28) aus einer Kupfer-Zink-Legierung umfasst, wobei jeder dieser strukturierten Bereiche ausschließlich aus einem Geflecht aus einer Kupfer-Zink-Legierung in der Gamma-Phase und einer Kupfer-Zink-Legierung in der Epsilon-Phase besteht,
**dadurch gekennzeichnet, dass** innerhalb jedes strukturierten Bereichs (26-28) aus einer Kupfer-Zink-Legierung der Großteil der Kupfer-Zink-Legierung in der Gamma-Phase in Form einer lamellaren Textur ( ) (40) vorliegt, in der die Zwischenräume (54) zwischen den Lamellen (44, 46) aus der Kupfer-Zink-Legierung in der Gamma-Phase mit der Kupfer-Zink-Legierung in der Epsilon-Phase gefüllt sind.

2. Elektrodendraht nach Anspruch 1, wobei die Beschichtung eine erste Schicht (18) aus einer Kupfer-Zink-Legierung aufweist, die sich über den gesamten Umfang des Kerns erstreckt, wobei sich jeder texturierte Bereich aus einer Kupfer-Zink-Legierung innerhalb dieser ersten Schicht befindet.

3. Elektrodendraht nach Anspruch 2, wobei die erste Schicht (18) die Oberflächenschicht des Elektrodendrahts bildet, sodass jeder texturierte Bereich aus einer Kupfer-Zink-Legierung bündig mit der Außenseite des Elektrodendrahts abschließt.

4. Elektrodendraht nach Anspruch 2 oder 3, wobei die erste Schicht (18) Brüche (22-24) aufweist, die in einem Querschnitt des Elektrodendrahts die verschiedenen texturierten Bereiche (26-28) aus einer Kupfer-Zink-Legierung mechanisch voneinander trennen.

5. Elektrodendraht nach einem der vorstehenden Ansprüche, wobei die Beschichtung (12) vom Kern (10) zur Außenseite des Elektrodendrahts hin nacheinander umfasst:
- eine homogene zweite Schicht (16) aus einer Kupfer-Zink-Legierung, die ausschließlich aus einer Kupfer-Zink-Legierung in der Gamma-Phase besteht, und
- die erste Schicht (18), die direkt auf der zweiten Schicht aufgebracht ist.

6. Elektrodendraht nach einem der vorstehenden Ansprüche, wobei die Dicke der ersten Schicht (18) aus einer Kupfer-Zink-Legierung größer als 2 µm ist und die größte Breite jeder texturierten Zone (26-28) aus einer Kupfer-Zink-Legierung in einem Querschnitt des Elektrodendrahts größer als 5 µm ist.

7. Elektrodendraht nach einem der vorstehenden Ansprüche, wobei:
- sich jede Lamelle (44, 46) der lamellaren Textur in einem Querschnitt des Elektrodendrahts hauptsächlich entlang einer jeweiligen Mittellinie (48, 50) erstreckt und
- bei der Mehrheit der Lamellen der Lamellenstruktur die durchschnittliche Dicke der Lamelle entlang ihrer Mittellinie weniger als 1 µm oder 0,5 µm beträgt.

8. Elektrodendraht nach Anspruch 7, wobei bei der Mehrheit der zwischen zwei Lamellen befindlichen Zwischenräume (54) die maximale Breite dieses Zwischenraums kleiner als 1 µm oder kleiner als 0,5 µm ist.

9. Verfahren zur Herstellung eines Elektrodendrahts gemäß einem der vorstehenden Ansprüche, **dadurch gekennzeichnet, dass** dieses Verfahren die folgenden Schritte umfasst:
a) Aufbringen (82) einer Beschichtung auf einen Metallrohdraht, die in der Lage ist, bei einer Temperatur zwischen 559 °C und 700 °C eine Kupfer-Zink-Legierungsschicht in der Delta-Phase zu bilden, und anschließend
b) diese Beschichtung auf eine Temperatur zwischen 559 °C und 700 °C zu bringen (84) und die Beschichtung auf dieser Temperatur zu halten, bis eine Kupfer-Zink-Legierungsschicht in der Delta-Phase erhalten wird, und anschließend
c) sobald die Kupfer-Zink-Legierungsschicht in der Delta-Phase erhalten ist, eine erste Abkühlung (90) durchzuführen, bei der die Temperatur dieser Kupfer-Zink-Legierungsschicht, die sich in der Delta-Phase befand, für eine Dauer d₁ zwischen den Zeitdauern d_{1 min} und d₁ₘₐₓ , wobei:
- die Dauer d₁ₘᵢₙ die Mindestdauer ist, während der die Temperatur der Kupfer-Zink-Legierung in der Delta-Phase zwischen 559 °C und 350 °C gehalten werden muss, damit:
- sich ein Teil der Kupfer-Zink-Legierung in der Delta-Phase in eine Kupfer-Zink-Legierung in der Gamma-Phase umwandelt und eine lamellare Textur aus Kupfer-Zink-Legierung in der Gamma-Phase bildet, die den Großteil der Kupfer-Zink-Legierung in der Gamma-Phase enthält, und
- gleichzeitig der andere Teil der Kupfer-Zink-Legierung in der Delta-Phase in eine Kupfer-Zink-Legierung in der Epsilon-Phase umwandelt, die die Zwischenräume zwischen den Lamellen der lamellaren Struktur aus der Kupfer-Zink-Legierung in der Gamma-Phase ausfüllt, und
- die Dauer d₁ₘₐₓ ist die Zeit, nach deren Ablauf die lamellare Struktur aus einer Kupfer-Zink-Legierung in der Gamma-Phase verschwindet und einer Unterschicht Platz macht, deren Gewicht zu 90 % aus einer Kupfer-Zink-Legierung in der Gamma-Phase besteht, und anschließend
d) unmittelbar nach Ablauf der Zeitdauer d₁ eine zweite Abkühlung (92) durchzuführen, die die Temperatur der lamellaren Struktur in weniger als 0,05 s auf 30 °C senkt.

10. Verfahren nach Anspruch 9, wobei die Dauer d₁ₘᵢₙgrößer oder gleich 0,1 s und die Dauer d₁ₘₐₓkleiner oder gleich 1,5 s ist.

11. Verfahren nach einem der Ansprüche 9 bis 10, wobei:
- die Kupferkonzentration einer Oberflächenschicht des Rohdrahts größer als 50 oder 60 Atomprozent ist und
- die Herstellung der Beschichtung das Aufbringen einer Schicht direkt auf diese Oberflächenschicht des Rohdrahts umfasst, deren Zinkkonzentration mehr als 98 Atomprozent beträgt.

12. Verfahren nach Anspruch 11, wobei der Schritt b) darin besteht, den Rohdraht, auf dem die Beschichtung aufgebracht wurde, für 6 s in einen Ofen bei 600 °C zu geben.

## Claims

1. An electrode wire for electrical discharge machining, the electrode wire comprising:
- a metal core (10), and
- on the metal core, a coating (12) comprising one or more textured zones (26-28) of a copper-zinc alloy, each of these textured zones being formed solely of an interlocking structure of gamma-phase copper-zinc alloy and epsilon-phase copper-zinc alloy,
**characterised in that**, within each textured zone (26-28) of copper-zinc alloy the majority of the gamma-phase copper-zinc alloy takes the form of a lamellar texture (40) in which the interstices (54) between the lamellae (44, 46) of gamma-phase copper-zinc alloy are filled by the epsilon-phase copper-zinc alloy.

2. An electrode wire according to claim 1, wherein the coating comprises a first layer (18) of copper-zinc alloy extending over the entire periphery of the core, with each textured zone of copper-zinc alloy being located within this first layer.

3. An electrode wire according to claim 2, wherein the first layer (18) forms the surface layer of the electrode wire such that each textured zone of copper-zinc alloy lies flush with the outer surface of the electrode wire.

4. An electrode wire according to claim 2 or 3, wherein the first layer (18) comprises fractures (22-24) which, in a cross-section of the electrode wire, mechanically separate the various textured zones (26-28) of copper-zinc alloy.

5. An electrode wire according to any one of the preceding claims, in which the coating (12) comprises, in succession from the core (10) towards the outer surface of the electrode wire:
- a homogeneous second layer (16) of copper-zinc alloy consisting solely of copper-zinc alloy in the gamma phase, and
- the first layer (18) formed directly on top of the second layer.

6. An electrode wire according to any one of the preceding claims, wherein the thickness of the first layer (18) of copper-zinc alloy is greater than 2 µm and the greatest width, in a cross-section of the electrode wire, of each textured zone (26-28) of copper-zinc alloy is greater than 5 µm.

7. An electrode wire according to any one of the preceding claims, wherein:
- each lamella (44, 46) of the lamellar texture extends, in a cross-section of the electrode wire, principally along a respective central path (48, 50), and
- for the majority of the lamellae in the lamellar texture, the average thickness of the lamella along its central path is less than 1 µm or 0.5 µm.

8. An electrode wire according to claim 7, wherein, for the majority of the gaps (54) situated between two lamellae, the maximum width of that gap is less than 1 µm or 0.5 µm.

9. A method of manufacturing an electrode wire in accordance with any one of the preceding claims, **characterised in that** the method comprises the following steps:
a) applying (82) to a metal blank wire a coating capable of forming a delta-phase copper-zinc alloy layer when its temperature is between 559°C and 700°C, then
b) heating (84) this coating to a temperature between 559°C and 700°C and maintaining the coating at this temperature until a delta-phase copper-zinc alloy layer is obtained, then
c) as soon as the delta-phase copper-zinc alloy layer has been formed, carrying out an initial cooling (90) which maintains the temperature of this copper-zinc alloy layer, which was in the delta phase, at a temperature below 559°C and above 350°C for a duration d₁ lying between the durations d₁ₘᵢₙ and d₁ₘₐₓ , where:
- the duration d₁ₘᵢₙ is the minimum duration for which the temperature of the copper-zinc alloy in the delta phase must be maintained between 559°C and 350°C so that:
- a portion of the copper-zinc alloy in the delta phase transforms into a copper-zinc alloy in the gamma phase and forms a lamellar texture of the copper-zinc alloy in the gamma phase, which contains the majority of the copper-zinc alloy in the gamma phase, and
- at the same time, the remaining portion of the copper-zinc alloy in the delta phase transforms into a copper-zinc alloy in the epsilon phase, which fills the interstices between the lamellae of the lamellar texture of the copper-zinc alloy in the gamma phase, and
- the duration d₁ₘₐₓis the duration beyond which the lamellar texture of the copper-zinc alloy disappears, giving way to a sub-layer 90 per cent of the weight of which consists of a gamma-phase copper-zinc alloy, then
d) immediately after the duration d₁has elapsed, carrying out a second cooling step (92) which brings the temperature of the lamellar texture down to 30°C in less than 0.05 s.

10. A method according to claim 9, wherein the duration d₁ₘᵢₙis greater than or equal to 0.1 s and the duration d₁ₘₐₓis less than or equal to 1.5 s.

11. A method according to any one of claims 9 to 10, in which:
- the copper concentration of a surface layer of the blank wire is greater than 50% or 60% by atom, and
- the coating process comprises forming, directly on this surface layer of the blank wire, a layer having a zinc concentration greater than 98 atomic per cent.

12. A method according to claim 11, in which step (b) consists of placing the blank wire on which the coating has been applied in a furnace at 600°C for 6 s.
